# FASCICULE DE BREVET EUROPEEN

(11) **EP 1 675 468 B1**
(45) Date de publication et mention de la délivrance du brevet: **02.07.2014**
(21) Numéro de dépôt: 04725019.6
(22) Date de dépôt: 01.04.2004
(51) Int. Cl.: A21D 10/02, A21D 8/06, A21D 6/00, A21D 2/16, A21D 10/04

(54) **PATE A GATEAU**
KUCHENTEIG
Cake mixture

(30) Priorité: 13.10.2003 EP 03023035
(43) Date de publication de la demande: 05.07.2006
(73) Titulaire: Nestec S.A., 1800 Vevey (CH)
(72) Inventeur: BLANCHE, Stéphanie, 78224 Singen (DE); EKBERG, Anders, S-267 40 Bjuv (SE); BLOECHLINGER, Kurt, CH-8310 Kemptthal (CH)
(74) Mandataire: Mollet, Beat Max
(86) Numéro de dépôt international: PCT/EP2004/003464
(87) Numéro de publication internationale: WO 2005/034636

(56) Documents cités:
- EP-A- 0 163 496
- EP-A- 0 564 077
- US-A- 4 514 430
- US-A- 5 071 668
- US-A- 5 171 599
- US-B1- 6 551 640

## Description

La présente demande concerne un produit de pâte liquide ou fluide pour la préparation de desserts pâtissiers du type fondant au chocolat par exemple.

Les desserts pâtissiers du type fondant tel que le fondant au chocolat sont particulièrement appréciés par les consommateurs et en particulier par les amateurs de chocolat. En effet, ce type de produit se caractérise par un extérieur constitué de pâte cuite moelleuse plus ou moins levée et aérée, éventuellement croustillante en surface, entourant dans son intégralité un intérieur ou coeur fluide, coulant ou fondant. Le produit pâtissier ainsi obtenu présente ainsi un intérieur fondant en ce sens qu'il semble contenir un fourrage mou plus ou moins coulant à température ambiante et fluide à des températures se situant au delà. Ce type de produit est particulièrement apprécié du fait de ce contraste de texture entre la souplesse de l'apprêt extérieur et le coulant de l'intérieur constitué d'une masse chocolatée fluide ou fondante riche en chocolat et en matière grasse telle que du beurre. De manière usuelle, l'apprêt extérieur est plus ou moins levé, ceci dépendant de la quantité d'agent de levage contenu. Sa surface extérieure est en général plus ou moins croustillante, ceci en fonction de l'intensité et du mode de cuisson. Le coeur fondant comprend une base chocolat agrémentée d'une masse de matière grasse molle mais non liquide à température ambiante conférant ainsi l'onctuosité et le fondant du produit fini.

Ce type de produit est généralement préparé extemporanément par le consommateur lui-même selon différentes recettes. De manière générale, les différentes recettes comprennent une importante quantité de chocolat complémenté de matière grasse - principalement du beurre - le tout additionné de sucre, d'oeuf et de farine. L'ajout d'agent de levage chimique est optionnel et en général est omis. Pratiquement, la préparation débute par faire fondre et mélanger chocolat et matière grasse d'un coté ; de mixer intimement sucre, farine et oeufs de l'autre, puis enfin à mélanger en une pâte homogène les deux préparations. La pâte obtenue peut être versée soit dans un moule multi-parts ou dans des moules individuels puis mise à cuire dans un four traditionnel à convection à une température de l'ordre de 200°C environ par exemple durant 10 à 30 minutes selon la taille des moules utilisés et la quantité de pâte.

Le produit obtenu, type gâteau, présente un extérieur de pâte cuite enrobant un coeur fondant ou coulant chocolaté.

La préparation de tels produits est longue et fastidieuse du fait des diverses étapes de fonte du chocolat et de la matière grasse, suivie de deux étapes de mélange. En outre, une telle préparation implique l'utilisation de nombreux équipements et accessoires de cuisine, ce qui constitue aussi une barrière supplémentaire à sa mise en oeuvre par les consommateurs dont le mode de vie est de moins en moins adapté à des préparations culinaires longues et fastidieuses.

Il existe des produits cuits tout prêts sur le marché, mais de tels produits ne présentent pas les qualités organoleptiques maximales d'un produit fraîchement cuit. La partie externe de pâte est souvent ramollie et détrempée du fait du long stockage et de plus, l'intérieur n'est finalement pas très fondant mais plutôt compact ou au contraire plutôt trop aéré et ne se rapproche plus du produit désiré.

Comme alternative, le consommateur dispose de préparations pâtissières crues surgelées permettant, par cuisson directe, de préparer des produits du type de ceux décrits plus haut. Cependant de tels produits surgelés ne laissent que peu de place à la créativité et n'impliquent aucune intervention de la part du consommateur qui se retrouve ainsi devant un produit standardisé sans aucune marge de manoeuvre quant à sa participation dans la confection du produit. En effet, même si la préparation de tels produits est perçue comme un handicap, la standardisation de produits de grande consommation ne constitue qu'une réponse partielle. Ainsi, les consommateurs sont de plus en plus enclins à utiliser des produits dont la confection implique une participation de leur part. Ainsi, tout en ayant les avantages d'un produit industriel standardisé, le consommateur peut ainsi apporter sa manière personnelle de réaliser le produit en le distinguant ainsi des produits de grande consommation tout en réduisant les efforts et les complications au minimum.

A cet effet il existe sur le marché des pre-mix déshydratés utilisables pour la réalisation de pâtes par simple ajout d'une quantité déterminée de source de liquide et/ou de matière grasse et/ou de chocolat puis d'un mélange. Ces produits se conservent en général sans problème, cependant ils ne permettent pas de s'affranchir des étapes de fonte du chocolat et de la matière grasse et en tout cas de mélange qui comme expliqué plus haut sont souvent perçues par le consommateur comme des obstacles.

Des produits de pâtes liquides ou fluides prêtes à cuire, réfrigérés ou stables à température ambiante, ont été décrits. Il s'agit principalement de produits dont la conservation est assurée par l'utilisation de conservateurs chimiques. Pour certains autres produits, la stabilité lors de la conservation est assurée par réduction drastique de l'activité de l'eau (Aw) du produit à des valeurs de l'ordre de 0.9 et en dessous. La nature sucrée de tels produits et des produits de pâtisserie pour la fabrication desquels ils sont destinés permet facilement de réguler cette Aw par ajout de quantités importantes de sucre jouant à la fois le rôle d'ingrédient gustatif, d'agent de charge et d'agent réducteur de l'Aw. Il est très important que de tels produits présentent une viscosité aussi faible que possible pour pouvoir être versés aisément dans un moule pour cuisson et ceci autant à température ambiante qu'aux températures de réfrigération usuelles. Cette viscosité doit aussi être compatible avec la formulation adéquate de ladite pâte, et en particulier la quantité adéquate d'agents réducteurs de l'Aw qui contribuent aussi à augmenter la viscosité.

Dans le cas particulier des produits de type fondant au chocolat, lors de la préparation ménagère de la pâte, les matières grasses et le chocolat sont fondus et mélangés aux autres ingrédients. La température substantiellement élevée de la pâte à ce moment fait que sa viscosité est compatible avec la nécessité de la verser aisément. Cependant, du fait de la quantité de matières grasses, en particulier beurre mais aussi de chocolat qui constitue lui-même une source important de matières grasses solides à température ambiante, la réfrigération d'un tel produit entraîne une solidification de ces matières grasses contenues. Ainsi réfrigérée, la pâte obtenue se transforme en un bloc compact dont la viscosité le rend très difficile voire impossible à verser. De ce fait, il s'est avéré impossible de disposer de pâte fluide destinée à la réalisation de fondant présentant toutes les qualités organoleptiques d'un produit traditionnel, tel que fondant au chocolat, et qui présente la particularité de pouvoir se conserver plusieurs semaines aux températures de réfrigération usuelles tout en conservant cette même fluidité la rendant apte à être versée aisément lors de son utilisation finale dès sa sortie du réfrigérateur. En effet, la solution consistant à utiliser des matières grasses, fluides aux températures de réfrigération fait que le produit final cuit présente une pâte extérieure imbibée de graisse et huileuse au toucher ainsi qu'en bouche - ce qui est très désagréable.

US 5171599 est relatif à une pâte à cookie réfrigerée. Il existe d'autres documents antérieurs, mais moins proches car n'ayant pas pour objet des pâtes fluides. Le brevet EP 163496 concerne des inclusions utilisées pour la préparation d'une pâte à cookie, et ne concerne pas une pâte prête à l'emploi ayant un certain degré de fluidité. Dans ce brevet, le but est d'améliorer la qualité des cookies en y intégrant des morceaux de chocolat de bonne qualité. Le brevet US 6551640 concerne également des cookies. Le but est de conserver l'intégrité des inclusions lors du stockage et pas de préparer une pâte liquide. Finalement le brevet EP 564077 concerne un produit à faible teneur en graisse, dans lequel il n'est pas question de pâte liquide à température de réfrigération.

C'est donc là un objet de la présente invention de fournir un produit de pâte liquide ou fluide susceptible d'être conservée plusieurs semaines à l'état réfrigéré et qui permette la confection de produits pâtissiers du type fondant par la simple action de verser ladite pâte dans un moule et de cuire dans un four traditionnel.

A cet effet, la présente invention concerne une pâte prête à l'emploi fluide et stable plusieurs semaines à l'état réfrigéré comprenant une phase continue de pâte comprenant farine, eau et sucre, présentant une Aw comprise entre 0.85 et 0.90 caractérisée en ce qu'elle comprend au moins une source de matière grasse présente sous la forme de particules discrètes réparties au sein de la phase continue dedite pâte, ladite pâte ayant une viscosité Bostwick à 8 °C selon le tableau suivant

| Temps (s) | 10 | 20 | 30 | 40 |
|---|---|---|---|---|
| Distance (cm) | 3-9 | 4-10 | 5-11 | 6-12 |

avec pour la mesure un premier compartiment de dimension 5x5x3,8cm et un second compartiment de dimension 5x24x2,5 cm.

Dans la suite de la présente demande les pourcentages sont exprimés en poids, sauf indication contraire.

Par l'expression "particules discrètes de matière grasse", on entend que la matière grasse est présente sous forme de parties solides d'élément matériel distinctes substantiellement visibles à l'oeil nu et réparties au sein de la phase continue de pâte.

Ainsi et de manière surprenante, on a pu remarquer que le fait de mettre en oeuvre toute ou partie de la matière grasse sous forme de particules discrètes réparties au sein de la pâte et non pas sous une forme diffuse et continue permet d'obtenir une pâte dont la fluidité est satisfaisante pour pouvoir être versée. Ainsi, on a pu se rendre compte que dans le cas ou la matière grasse est uniformément répartie, et ceci de manière diffuse et continue, la pâte perd une grande partie de sa fluidité et devient ainsi très difficile à verser ou ne donne pas le résultat escompté, à savoir un gateau de type fondant. En effet, une fois réfrigérée, cette matière grasse continue solidifie et le mélange devient ainsi très compact et par là même très difficile à verser.

A l'inverse, et selon le moyen principal de la présente invention, toute ou partie de la source de matière grasse de la pâte à gâteau selon l'invention est sous la forme de morceaux/particules de matière grasse discrets répartis dans la phase continue de pâte. Une fois réfrigérée, la pâte selon l'invention est fluide et non pas compacte car la matière grasse solide n'est pas répartie de manière continue et uniforme et ne joue ainsi pas le rôle de ciment. La pâte présente ainsi toute la fluidité nécessaire pour pouvoir être versée.

Dans le contexte de la présente invention, la caractéristique "fluide" signifie que la pâte peut être versée depuis son emballage jusque dans un moule et ce de manière aisée, c'est à dire encore qu'elle peut s'écrouler toute seule sans contrainte extérieure trop importante. A cet effet, la pâte selon l'invention peut être caractérisé par sa consistance Bostwick - méthode couramment utilisée dans l'industrie alimentaire.

Par exemple, avant d'effectuer les mesures, la pâte liquide est préalablement placée à 8°C jusqu'à ce qu'un équilibre soit atteint. Les mesures sont effectuées dans une chambre tempérée à 8°C. La pâte est ensuite versée dans le premier compartiment fermé de l'équipement "Bostwick Consistometer®", occupant ainsi un volume total de 5x5x3.8 cm. Le test commence au moment où ce compartiment est ouvert. Sous l'influence de la gravité, la pâte s'écoule dans le second compartiment (largeur 5 cm, longueur 24 cm, hauteur ∼2.5 cm). Ce deuxième compartiment est gradué (incréments de 0.5 cm), et la distance parcourue par la pâte est mesurée après 10, 20, 30 et 40 secondes. Lorsque la pâte s'écoule en produisant une surface curviligne, la distance la plus élevée est prise en compte.

Les résultat suivants sont obtenus :

| Temps (s) | 10 | 20 | 30 | 40 |
|---|---|---|---|---|
| Distance (cm) | 3-9 | 4-10 | 5-11 | 6-12 |

Un tel comportement témoigne d'une capacité d'écoulement tout à fait compatible avec le but recherché. En effet, cette consistance est obtenue aux alentours de 8°C, température usuelle à laquelle est utilisée une pâte de ce genre.

La source de matière grasse peut être une matière grasse solide aux température de réfrigération usuelles et préférentiellement solide aux températures ambiantes usuelles. Par l'expression "solide à température ambiante" on entend que la matière grasse présente un SFC (Solid Fat Content) de l'ordre de 15. à 80%, préférentiellement de l'ordre de 20 à 60% et plus préférentiellement encore de l'ordre de 20 à 45% aux environs de 20°C. Une source de matière grasse convenable pour la présente invention peut ainsi être choisie dans le groupe comprenant : le beurre, le beurre de cacao, le chocolat, les substituts de beurre de cacao, les graisses végétales hydrogénées telle que l'huile de palme hydrogénée utilisés seuls ou en mélange. En effet, compte tenu de la teneur en matière grasse du chocolat - de l'ordre de 28 à 45% - le chocolat convient particulièrement en tant que source partielle de matière grasse selon l'invention. Il va de soit que comme dans le cas d'une recette traditionnelle comprenant une part importante de beurre, la source de matière grasse que représente le chocolat pourra être supplémentée par du beurre ou du beurre de cacao. Le beurre se présentera alors, au moins pour partie, sous la forme de particules discrètes, ou morceaux discrets, de beurre repartis dans la masse continue de pâte fluide. Pour des raisons de coût, on pourra préférer une matière grasse de type susbstitut de beurre de cacao telle qu'une huile de palme hydrogénée ou une huile de palmiste hydrogénée.

De manière préférentielle, la source de matière grasse sous la forme de particules discrètes représente au moins 60 %, de préférence au moins 70%, plus préférentiellement au moins 80 %, et plus préférentiellement encore au moins 90% voire au moins 95 % de la matière grasse totale contenue dans la pâte prête à l'emploi selon la présente invention.

En effet, la phase continue de pâte comprenant principalement farine, eau et sucre peut en outre comprendre des traces provenant de la farine ou des sources de matière grasse telle que de la poudre de cacao non dégraissée ou de la poudre d'oeuf par exemple, voire une huile liquide à température ambiante, ce qui fait que de la matière grasse est aussi comprise dans la pâte prête à l'emploi selon la présente invention sous une forme uniformément répartie et non pas sous forme de particules. Cependant, cette matière grasse répartie uniformément ne représente qu'une faible partie de la matière grasse totale de la pâte prête à l'emploi selon la présente invention.

La présente invention concerne ainsi l'utilisation de source de matière grasse sous la forme de particules discrètes réparties au sein d'une phase continue de pâte fluide réfrigérée comprenant farine, eau et sucre, caractérisée en ce que la teneur en matière grasse totale de la pâte y incluant les particules est d'environ 12 à 25% ; préférentiellement de 15 à 20 % ; et plus préférentiellement encore de 16 à 18 % ; ceci pour assurer la fluidité nécessaire à l'écoulement de ladite pâte lors du transfert depuis son emballage vers un moule de cuisson. De manière préférentielle la matière grasse sous forme de particules représente au moins 60 %, préférentiellement au moins 70 %, plus préférentiellement au moins 80 %, et plus préférentiellement encore au moins 90 %, voire au moins 95% de la matière grasse totale du produit fini de pâte fluide prête à l'emploi.

La taille des particules discrètes de source de matière grasse se situe dans une gamme aisément déterminable par un homme du métier de manière à permettre l'écoulement. Ainsi les particules ne doivent pas être trop grosses pour pouvoir non seulement s'écouler mais aussi éviter de trop sédimenter lors du stockage mais aussi lors de la cuisson. A l'inverse il n'est pas souhaitable que les particules soient de trop petite taille de manière à ne pas constituer un réseau s'opposant à l'écoulement de la pâte. En outre, en cas de choc thermique, des particules de trop petite taille risquent de fondre au moins partiellement et de reconstituer un réseau continu lors du refroidissement, réseau formant ciment s'opposant à ou pour le moins limitant l'écoulement. Enfin, la mise en oeuvre de particules de trop petite taille est difficile et délicate. En effet, lors de la préparation de la pâte, l'incorporation des particules de source de matière grasse avec la pâte nécessite un mélange intime qui peut entraîner un dégagement de chaleur responsable de la fonte - même partielle - de la matière grasse qui une fois refroidie agira comme ciment et mènera à un produit compact et non plus fluide.

Ainsi, les particules de source de matière grasse de la pâte selon la présente invention présentent une taille moyenne de l'ordre de 0.1 à environ 4 mm, préférentiellement de 0.5 à 3 mm et encore plus préférentiellement encore de 0.5 à 2 mm . Il est clair que la forme des particules n'est pas régulièrement cylindrique ou cubique et la taille indiquée ci-dessus correspond à la section moyenne pour des particules dont la forme est irrégulière. Ainsi les particules peuvent se présenter sous la forme de sphères, cubes ou parallélépipèdes irrégulières ou sous la forme de flocons par exemple. Il est ainsi plus aisé de parler de volume moyen des particules de source de matière grasse et le volume moyen de telle particules se situe dans un domaine allant d'environ 0.01 mm3 à 80 mm3, préférentiellement de 0.01 à 40 mm3, plus préférentiellement de 0.1 à 20 mm3, plus préférentiellement encore 0.1 à 10 mm3 voire aux alentours de 1 mm3.

Sachant que le chocolat peut constituer une source de matière grasse au sens de la présent invention, il est tout à fait envisageable de prévoir des morceaux de chocolat de taille supérieure à la taille moyenne indiquée plus haut. En effet, des morceaux de chocolat plus gros peuvent contribuer à l'obtention d'inclusion de chocolat fondant au sein du gâteau obtenu après cuisson. Il a été ainsi observé et ceci de manière surprenante que l'apport de source de matière grasse sous la forme de particules discrètes reparties au sein de la phase continue d'une pâte réfrigérée comprenant farine, eau et sucre et ceci conformément à l'invention permet non seulement de conserver la fluidité de ladite pâte à des températures correspondant aux températures usuelles de réfrigération mais aussi d'obtenir un produit pâtissier cuit présentant toutes les qualités organoleptiques désirées. En effet, la pâte selon la présente invention peut être versée directement dans un moule dès sa sortie du réfrigérateur et mise à cuire dans un four traditionnel pour fournir un gâteau présentant toutes les caractéristiques d'un fondant. Ainsi, le gâteau obtenu présente un extérieur de pâte cuite et un intérieur fondant comprenant majoritairement de la matière grasse chocolatée coulante ou fondante, ceci suivant la température. En effet, si l'on découpe le gâteau peu de temps après sa sortie du four, l'intérieur chaud est coulant alors que s'il est laissé à refroidir, la source de matière grasse se solidifie partiellement en refroidissant et devient ainsi molle et fondante en bouche. Alternativement si la cuisson de la pâte est peu poussée, l'intérieur liquide après sortie du four restera liquide après refroidissement.

Il est clair que dans le cadre préférentiel de la présente invention concernant les gâteaux de type fondant au chocolat, les sources principales de matière grasse sont représentées par le chocolat, le beurre, le beurre de cacao, ou tout autre matière grasse solide à température ambiante, utilisés seuls ou en mélange. Ainsi, la source de matière grasse sous forme de particules discrètes pourra consister en des grains, granules ou pépites de chocolat et/ou de compound et/ou de beurre et/ou d'une quelconque matière grasse.solide à température ambiante par exemple. Le compound étant un produit composé de poudre de cacao dégraissé et de graisse végétale présentant des propriétés proches de celles du beurre de cacao. Alternativement il peut être envisagé de mettre en oeuvre du beurre additionné de poudre de cacao dégraissé comme source de matière grasse dans l'application fondant au chocolat.

La phase continue de pâte fluide comprend une pâte fluide traditionnelle comprenant farine, sucre eau. La quantité d'eau totale de la pâte selon l'invention est de l'ordre de 20 à 40%, préférenteiellement de 25 à 35%, et plus préférentiellement encore de l'ordre de 30%, ceci par rapport au poids du produit final. La pâte peut en outre comprendre un améliorant de texture du type ovoproduit tel que de l'oeuf entier, du jaune d'oeuf ou du blanc d'oeuf apportés sous forme liquide ou déshydratée. Un émulsifiant peut être ajouté tel qu'un ou des mono et diglycérides par exemple. La pâte peut contenir des arômes mais aussi des colorants. En particulier, la pâte de la phase continue peut contenir de la poudre de cacao pour renforcer le goût chocolaté du produit final ainsi que pour conférer la couleur sombre adéquate d'un fondant au chocolat.

Le goût chocolaté peut également être renforcé par tout moyen connus de l'homme du métier. On peut utiliser des extraits de levures, des lactones polycycliques, des arômes naturels et/ou artificiels de chocolat ou du L-glutamate par exemple.

Bien que la présente invention concerne un produit patissier de type fondant compact et peu aérée, la pâte selon la présente invention peut comprendre une quantité d'agent de levage comprise entre 0 et 2%. Des agents de levage pour patisserie sont disponibles tout prêts dans le commerce et sont en général composés de diphosphate et carbonate de sodium.

La présente invention concerne aussi un procédé de fabrication d'une pâte à gâteau fluide et stable plusieurs semaines à l'état réfrigéré, présentant une Aw comprise entre 0.85 et 0.9 comprenant les étapes suivantes :
- mélange d'une source de farine, d'une source de sucre, d'une source d'eau et ajout d'une source matière grasse solide à température ambiante
- mélange en maintenant la température de la pâte à une valeur inférieure à la température de fusion de la matière grasse et ceci jusqu'à obtention d'une pâte fluide dans laquelle la source de matière grasse solide à température ambiante se présente sous la forme de particules discrètes réparties au sein de la phase continue de pâte.

La farine mise en oeuvre peut être n'importe quelle sorte de farine céréalière telle qu'une farine de blé de type 55 ou 45 par exemple.

Le sucre utilisé peut être n'importe quel sucre alimentaire tel que le saccharose, le fructose, le glucose. Un sucre convenable est le saccharose cristallisé ou en poudre.

La présente invention concerne finalement une méthode rapide et simple de réalisation de gâteau de type fondant au comprenant les étapes de
- fournir une pâte à gâteau fluide comprenant eau, farine et sucre, stable plusieurs semaines à l'état réfrigéré, présentant une Aw comprise entre 0.85 et 0.90 caractérisée en ce qu'elle comprend au moins une source de matière grasse présente sous la forme de particules discrètes réparties au sein de la pâte, ladite pâte ayant une viscosité Bostwick à 8 °C selon le tableau suivant

| Temps (s) | 10 | 20 | 30 | 40 |
|---|---|---|---|---|
| Distance (cm) | 3-9 | 4-10 | 5-11 | 6-12 |

avec pour la mesure un premier compartiment de dimension 5x5x3,8cm et un second compartiment de dimension 5x24x2,5 cm.
- verser ladite pâte dans au moins un moule,
- procéder à la cuisson de la pâte ainsi versée,
- obtenir un gâteau cuit comprenant un intérieur fondant à base de matière grasse.

### EXEMPLE

Les ingrédients suivant sont ajoutés dans un mélangeur HOBART, le tout est mélangé à une température de l'ordre de 20°C :
Farine: 7 kg
Sucre: 18 kg
Eau: 13 litres
Matière grasse végétale (type substitut de beurre de cacao) en cube de 100 g : 5 kg
Chocolat râpé grossièrement (1 à 2 mm diamètre) : 5 kg Poudre d'oeuf : 2.5 kg

L'ensemble est mélangé et pétri pendant 3 minutes à vitesse lente jusqu'à obtention d'une pâte dans laquelle la matière grasse se présente sous la forme d'inclusions discrète uniformément reparties et distribuées au sein de la phase continue de pâte fluide.

La pâte ainsi obtenue est suffisamment fluide pour être versée dans des poches souples en matière plastiques à raison de 400 g par emballage qui sont ensuite thermo-scéllées sous atmosphère d'azote et refroidies aux environs de 5°C.

Les produits emballés ainsi réfrigérés sont conservés pendant 4 semaines à 5°C puis utilisés pour la confection d'un gâteau.

L'emballage est ouvert, la pâte est ensuite versée sans effort dans un moule de 23 cm de diamètre et l'ensemble est cuit dans un four à convection à une température de 200°C pendant 15 minutes.

Une fois refroidi à température ambiante, le gâteau obtenu présente un extérieur de pâte cuite renfermant un intérieur fondant chocolaté.

## Revendications

1. Pâte prête à l'emploi fluide et stable plusieurs semaines à l'état réfrigéré comprenant une phase continue de pâte comprenant farine, eau et sucre, présentant une Aw comprise entre 0.85 et 0.90 **caractérisée en ce qu'**elle comprend au moins une source de matière grasse présente sous la forme de particules discrètes réparties au sein de la phase continue dedite pâte, ladite pâte ayant une viscosité Bostwick à 8 °C selon le tableau suivant
| Temps (s) | 10 | 20 | 30 | 40 |
|---|---|---|---|---|
| Distance (cm) | 3-9 | 4-10 | 5-11 | 6-12 |
avec pour la mesure un premier compartiment de dimension 5x5x3,8cm et un second compartiment de dimension 5x24x2,5 cm.

2. Pâte selon la revendication 1, **caractérisée en ce que** la source de matière grasse est choisie dans le groupe comprenant : le beurre, le beurre de cacao, le chocolat, les substituts de beurre de cacao, les graisses végétales hydrogénées telle que l'huile de palme hydrogénée utilisés seuls ou en mélange.

3. Pâte selon la revendication 1, **caractérisée en ce que** la source de matière grasse sous la forme de particules discrètes représente au moins 60 %, de préférence au moins 70%, plus préférentiellement au moins 80 %, et plus préférentiellement encore au moins 90% voire au moins 95 % de la matière grasse totale contenue dans la pâte prête à l'emploi fluide selon la présente invention.

4. Utilisation de source de matière grasse sous la forme de particules discrètes réparties au sein d'une phase continue de pâte fluide réfrigérée comprenant farine, eau et sucre, ceci pour assurer la fluidité nécessaire à l'écoulement de ladite pâte à température réfrigérée lors du transfert depuis son emballage vers un moule de cuisson.

5. Utilisation selon la revendication 4, **caractérisée en ce que** la teneur en matière grasse totale de la pâte y incluant les particules est d'environ 12 à 25% ; préférentiellement de 15 à 20 % ; et plus préférentiellement encore de 16 à 18 %

6. Utilisation selon la revendication 4, **caractérisée en ce que** la matière grasse sous forme de particules représente au moins 60 %, préférentiellement au moins 70 %, plus préférentiellement au moins 80 %, et plus préférentiellement encore au moins 90 %, voire au moins 95% de la matière grasse totale du produit fini de pâte fluide prête à l'emploi.

7. Méthode de réalisation de gâteau de type fondant au comprenant les étapes de
- fournir une pâte à gâteau fluide comprenant eau, farine et sucre, stable plusieurs semaines à l'état réfrigéré, présentant une Aw comprise entre 0.85 et 0.90 **caractérisée en ce qu'**elle comprend au moins une source de matière grasse présente sous la forme de particules discrètes réparties au sein de la pâte, ladite pâte ayant une viscosity Bostwick à 8 °C selon le tableau suivant
| Temps (s) | 10 | 20 | 30 | 40 |
|---|---|---|---|---|
| Distance (cm) | 3-9 | 4-10 | 5-11 | 6-12 |
avec pour la mesure un premier compartiment de dimension 5x5x3,8 cm et un second compartiment de dimension 5x24x2,5 cm.
- verser ladite pâte dans au moins un moule,
- procéder à la cuisson de la pâte ainsi versée,
- obtenir un gâteau cuit comprenant un intérieur fondant à base de matière grasse.

## Patentansprüche

1. Fertigteig, der fließfähig und in gekühlter Form mehrere Wochen lang haltbar ist, aufweisend eine kontinuierliche Mischphase mit Mehl, Wasser und Zucker, und einem Aw-Wert zwischen 0.85 und 0.90,
**dadurch gekennzeichnet, dass**
er mindestens eine Fettquelle aufweist, die in Form von einzelnen Partikeln vorhanden ist, die in der kontinuierlichen Phase des Teigs verteilt sind, wobei der Teig eine Bostwick-Viskosität bei 8°C nach der folgenden Tabelle besitzt
| Zeit (s) | 10 | 20 | 30 | 40 |
|---|---|---|---|---|
| Distanz (cm) | 3-9 | 4-10 | 5-11 | 6-12 |
wobei die Messung in einer ersten Kammer mit den Abmessungen von 5x5x 3.8 cm und einer zweiten Kammer mit der Abmessung von 5x24x5 cm erfolgt.

2. Teig nach Anspruch 1, wobei die Fettquelle aus der Gruppe ausgewählt ist, die folgendes aufweist: Butter, Kakaobutter, Schokolade, Kakaobutterersatzstoffe und hydrierte Pflanzenfette, wie z.B. hydriertes Palmöl, allein oder als Mischung.

3. Teig nach Anspruch 1, wobei die Fettquelle in Form von einzelnen Partikeln mindestens 60%, vorzugsweise mindestens 70%, weiter bevorzugt mindestens 80%, noch weiter bevorzugt mindestens 90% oder sogar 95% des in dem erfindungsgemäßen fließfähigen Fertigteig enthaltenen Gesamtfettgehalts ausmacht.

4. Verwendung eine Fettquelle, die in Form von einzelnen Partikeln vorhanden ist, die in der kontinuierlichen Phase eines gekühlten Teigs verteilt sind, aufweisend Mehl, Wasser und Zucker, um das erforderliche Fließen des Teigs bei einer Kühltemperatur zu garantieren, wenn er von seiner Verpackung in eine Kuchenform gegeben wird.

5. Verwendung von Anspruch 4,
**dadurch gekennzeichnet, dass**
der Gesamtfettgehalt der Mischung einschließlich der Partikel von ca. 12% bis 25%, vorzugsweise 15 bis 20%, weiter bevorzugt zwischen 16 und 18% beträgt.

6. Verwendung von Anspruch 4,
**dadurch gekennzeichnet, dass**
die Fettquelle in Form von einzelnen Partikeln mindestens 60%, vorzugsweise mindestens 70%, weiter bevorzugt mindestens 80%, noch weiter bevorzugt mindestens 90% oder sogar 95% des in dem fließfähigen Fertigteig enthaltenen Gesamtfettgehalts ausmacht.

7. Verfahren zur Herstellung eines fondantartigen Kuchens, das die folgenden Schritte aufweist:
- Bereitstellen einer fließflähigen Kuchenmischung mit Wasser, Mehl und Zucker, die in gekühlter Form mehrere Wochen lang haltbar ist, und einen Aw-Wert zwischen 0.85 und 0.90, sowie mindestens eine Fettquelle aufweist, die in Form von einzelnen Partikeln vorhanden ist, die in der Mischung verteilt sind,
wobei der Teig eine Bostwick-Viskosität bei 8°C nach der folgenden Tabelle besitzt
| Zeit (s) | 10 | 20 | 30 | 40 |
|---|---|---|---|---|
| Distanz (cm) | 3-9 | 4-10 | 5-11 | 6-12 |
wobei die Messung in einer ersten Kammer mit den Abmessungen von 5x5x3.8 cm und einer zweiten Kammer mit der Abmessung von 5x24x5 cm erfolgt,
- Gießen der Mischung in mindestens eine Form,
- Backen der so gegossenen Mischung und
- Erhalten eines gebackenen Kuchens mit einem Fondant-Inneren auf Fettbasis.

## Claims

1. A ready-to-use dough that is fluid and stable for several weeks in refrigerated form, comprising a continuous mixture phase comprising flour, water and sugar, having an Aw of between 0.85 and 0.90,
**characterized in that**
it comprises at least one source of fat present in the form of discrete particles distributed in the continuous phase of said dough,
the dough having a Bostwick viscosity at 8°C according to the following table
| Time (s) | 10 | 20 | 30 | 40 |
|---|---|---|---|---|
| Distance (cm) | 3-9 | 4-10 | 5-11 | 6-12 |
the measurement being done with a first chamber having the dimensions of 5x5x3.8cm and a second chamber having the dimension of 5x24x5cm.

2. The dough as claimed in claim 1, wherein the source of fat is selected from the group consisting of: butter, cocoa butter, chocolate, cocoa butter substitutes, and hydrogenated plant fats, such as e.g. hydrogenated palm oil, alone or as a mixture.

3. The dough as claimed in claim 1, wherein the source of fat in the form of discrete particles represents at least 60%, preferably at least 70%, more preferred at least 80%, even more preferred at least 90% or even 95% of the total fat contained in the fluid ready-to-use dough according to the present invention.

4. Use of a fat source present in the form of discrete particles distributed in the continuous phase of a refrigerated dough comprising flour, water and sugar, for guaranteeing the required flow of the said dough at a refrigerated temperature when it is transferred from its packaging into a cooking mould.

5. The use of claim 4,
**characterized in that**
the total fat content of the mixture including the particles is from about 12% to 25%, preferably 15 to 20%, more preferred between 16 and 18%.

6. The use of claim 4,
**characterized in that**
the source of fat in the form of discrete particles represents at least 60%, preferably at least 70%, more preferred at least 80%, even more preferred at least 90% or even 95% of the total fat contained in the fluid ready-to-use dough.

7. A method for making a cake of fondant type comprising the steps of:
- providing a fluid cake mixture comprising water, flour and sugar, which is stable for several weeks in refrigerated form, having an Aw of between 0.85 and 0.90, and at least one source of fat present in the form of discrete particles distributed in the mixture,
the dough having a Bostwick viscosity at 8°C according to the following table
| Time (s) | 10 | 20 | 30 | 40 |
|---|---|---|---|---|
| Distance (cm) | 3-9 | 4-10 | 5-11 | 6-12 |
the measurement being done with a first chamber having the dimensions of 5x5x3.8cm and a second chamber having the dimension of 5x24x5cm,
- pouring the mixture into at least one mold,
- baking the mixture thus poured, and
- obtaining a baked cake comprising a fat-based fondant interior.
